# EUROPEAN PATENT APPLICATION

(11) **EP 4 525 229 A1**
(43) Date of publication of application: **19.03.2025**
(21) Application number: 23803187.6
(22) Date of filing: 12.01.2023
(51) Int. Cl.: H02B 13/00, H02B 13/035

(54) **SOLID INSULATED BUSBAR**

(30) Priority: 10.05.2022 JP 2022077478
(71) Applicant: MITSUBISHI ELECTRIC CORPORATION, Chiyoda-ku Tokyo 100-8310 (JP)
(72) Inventor: SAIONJI Rei, Tokyo 100-8310 (JP); ABE Junichi, Tokyo 100-8310 (JP); KUROAKI Shintaro, Tokyo 100-8310 (JP)
(74) Representative: Witte, Weller & Partner Patentanwälte mbB
(86) International application number: PCT/JP2023/000531
(87) International publication number: WO 2023/218695

(57) **Abstract**

A solid insulated busbar (100) includes: a busbar (2) having a busbar conductor (2a) and an insulation layer (2b) coating a periphery of the busbar conductor (2a); an insulation adapter (1) supporting the busbar (2); an insulation plug (4) provided on a vertically upper side of the insulation adapter (1) and connected to the insulation adapter (1); and a bushing (3) provided on a vertically lower side of the insulation adapter (1) in order to connect the insulation adapter (1) and outside. The insulation plug (4) includes a buried upper metal insert (4b) and a conductive lid portion (4d), and the lid portion (4d) is in contact with a grounded shield layer (1b) at a surface of the insulation adapter (1).

## Description

### TECHNICAL FIELD

The present disclosure relates to a solid insulated busbar.

### BACKGROUND ART

In a gas-insulated switchgear, owing to a high insulation property of SF₆ gas, devices can be made compact, contributing to space saving in an electrical room. In the gas-insulated switchgear, a main circuit part to which high voltage is applied is stored in a closed container, and SF₆ gas having a high insulation property is sealed in the closed container, whereby main circuit devices are arranged in a compact form. In recent years, there have been cases where environmentally friendly gas, for example, dry air, is sealed as alternative gas, instead of SF₆ gas.

Such a gas-insulated switchgear is configured such that one or a plurality of devices are stored in one compartment (counted as one panel) and a plurality of such compartments are arranged and connected by a busbar.

Regarding a busbar part, a gas busbar style is generally used in installation of the gas-insulated switchgear, adjacent busbar tanks are connected to each other, to connect busbar conductors in the busbar tanks. In recent years, in some gas-insulated switchgears, a solid insulated busbar is used, thereby eliminating gas processing work on site in installment of a gas-insulated switchgear (for example, Patent Document 1).

The solid insulated busbar is composed of a busbar connecting main circuits of adjacent boards, and an insulation adapter provided so as to cover a connection part between each board and the busbar. The insulation adapter has, around the entire outer periphery, a grounded shield layer formed by a conductive paint or the like. To the insulation adapter, a conductive rubber cap is attached at an upper part of a conical insulation plug after attachment work, in order to block an electric field, ground leakage current, and prevent entry of a foreign material.

### CITATION LIST

### PATENT DOCUMENT

Patent Document 1: Japanese Laid-Open Patent Publication No. 2016-92883

### SUMMARY OF THE INVENTION

### PROBLEM TO BE SOLVED BY THE INVENTION

In the solid insulated busbar of Patent Document **1,** since the conductive rubber cap is used, a crack occurs due to deterioration through long-term usage and thus a surface pressure is reduced, so that leakage current might fail to be grounded.

The present disclosure has been made to solve the above problem, and an object of the present disclosure is to prevent deterioration through a long period from influencing an electric field blocking function, an electric charge grounding function, and a foreign material entry preventing function.

### MEANS TO SOLVE THE PROBLEM

A solid insulated busbar according to the present disclosure includes: a busbar having a busbar conductor and an insulation layer coating a periphery of the busbar conductor; an insulation adapter supporting the busbar; an insulation plug provided on a vertically upper side of the insulation adapter and connected to the insulation adapter; and a bushing provided on a vertically lower side of the insulation adapter in order to connect the insulation adapter and outside. The insulation plug includes an upper metal insert and a conductive lid portion, and the lid portion is in contact with a grounded shield layer at a surface of the insulation adapter.

### EFFECT OF THE INVENTION

The solid insulated busbar according to the present disclosure can prevent deterioration of an electric field blocking function, an electric charge grounding function, and a foreign material entry preventing function through a long period.

### BRIEF DESCRIPTION OF THE DRAWINGS

[FIG. 1] FIG. 1 is a sectional view showing a structure of a solid insulated busbar according to embodiment 1.
[FIG. 2] FIG. 2 is a sectional view showing a structure of a solid insulated busbar in a comparative example.
[FIG. 3] FIG. 3 is a sectional view showing another structure of the solid insulated busbar according to embodiment 1.
[FIG. 4] FIG. 4 is a sectional view showing a structure of a solid insulated busbar according to embodiment 2.
[FIG. 5] FIG. 5A is a sectional view showing a structure of a solid insulated busbar according to embodiment 3. FIG. 5B is a detailed view showing a part of FIG. 5A.
[FIG. 6] FIG. 6 is a sectional view showing a structure of a solid insulated busbar according to embodiment 4.

### DESCRIPTION OF EMBODIMENTS

### Embodiment 1

Embodiment 1 relates to a solid insulated busbar including a busbar having a busbar conductor and an insulation layer coating a periphery of the busbar conductor; an insulation adapter supporting the busbar; an insulation plug provided on a vertically upper side of the insulation adapter and connected to the insulation adapter; and a bushing provided on a vertically lower side of the insulation adapter in order to connect the insulation adapter and outside, wherein the insulation plug includes a lid portion integrated with an upper metal insert buried in the insulation plug, and the lid portion is in contact with a grounded shield layer at a surface of the insulation adapter.

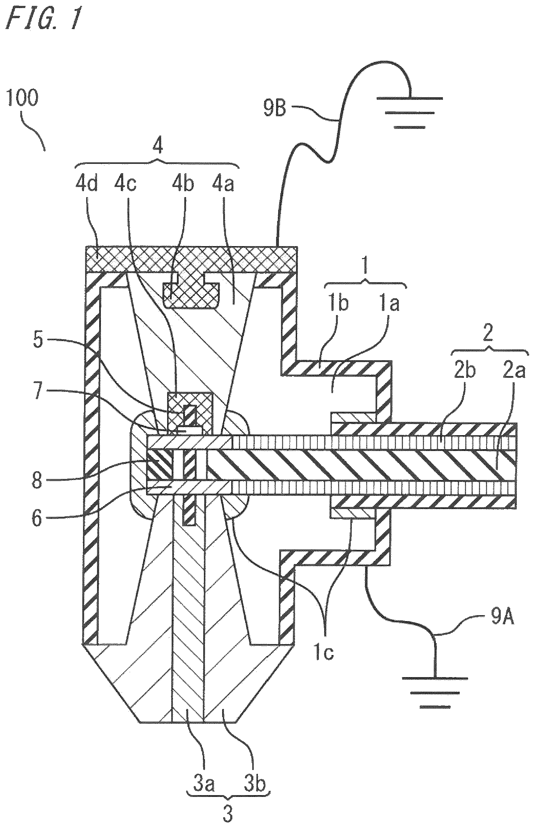

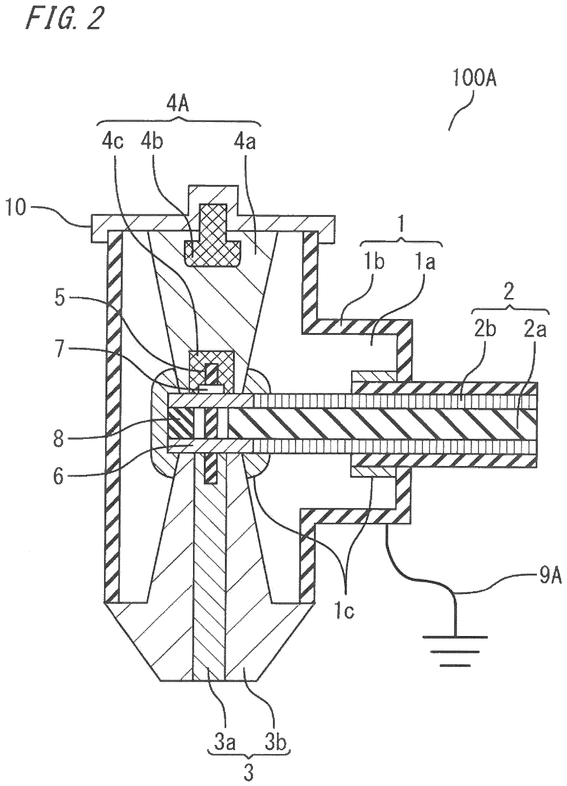

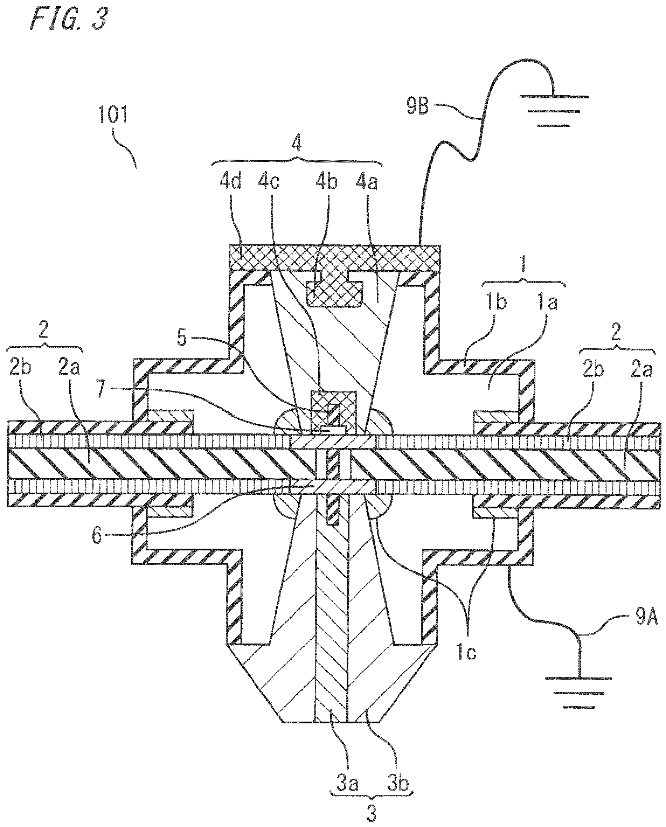

Hereinafter, the solid insulated busbar according to embodiment 1 will be described with reference to FIG. 1 which is a sectional view showing a structure of the solid insulated busbar, FIG. 2 which is a sectional view showing a structure in a comparative example, and FIG. 3 which is a sectional view showing another structure.

In the drawings, the same or corresponding parts are denoted by the same reference characters and the same description will not repeatedly be given for such parts.

The entire configuration of a solid insulated busbar 100 of embodiment 1 will be described with reference to FIG. 1.

The solid insulated busbar 100 of embodiment 1 includes an insulation adapter 1, a busbar 2, a bushing 3, and an insulation plug 4, as main components.

First, the overall function of the solid insulated busbar 100 and relationships between the main components will be described. In the description of the overall function, reference characters of components other than the main components are omitted for simplification.

The solid insulated busbar 100 includes the busbar 2 connecting main circuits of adjacent boards present outside, and the insulation adapter 1 detachably provided so as to cover a connection part between the busbar 2 and each board. The insulation adapter 1 has, around the entire outer periphery, a grounded shield layer formed by a conductive paint or the like.

The insulation adapter 1 has, on the vertically upper side, a conical portion for facilitating connection between the board main circuit and the busbar 2, and after the board main circuit and the busbar 2 are connected, the insulation plug 4 is inserted to close the cone hole.

The insulation plug 4 is a conical insulating body to be inserted into the insulation adapter 1, and is formed of an insulation layer such as epoxy resin and a metal insert such as copper or aluminum buried in the insulation layer.

For the insulation adapter 1, a lid portion of the insulation plug 4 serves to block an electric field, ground circulation current, and prevent entry of a foreign material, after connection work for the board main circuit and the busbar 2.

In the solid insulated busbar 100, since high voltage is applied to the insulation adapter 1 and a conductor coated with an insulating material and connecting the insulation adapter 1, an electric charge is induced from the high-voltage conductor to each insulating material surface. Therefore, it is necessary to ground the insulation adapter 1 and each insulating material surface.

Next, the function, the detailed configuration, and the material of each main component of the solid insulated busbar 100 will be described.

The insulation adapter 1 includes an insulation layer 1a, a grounded shield layer 1b, and a conductive layer 1c.

The insulation layer 1a is formed of an insulating material that is elastic and comparatively soft, such as silicone rubber or ethylene propylene rubber, and insulates charged parts (busbar conductor 2a and central conductor 3a) from outside.

The grounded shield layer 1b blocks an electric field generated from the charged parts, and the conductive layer 1c relaxes the electric field of the charged parts.

The insulation adapter 1 has a T-shaped structure having conical portions in the vertical direction and a cylindrical portion in a horizontal direction crossing the conical portions.

The busbar 2 is formed of a busbar conductor 2a and an insulation layer 2b.

In the busbar 2, a periphery of the busbar conductor 2a connecting the board main circuits is coated with the insulation layer 2b such as silicone rubber or epoxy resin.

The bushing 3 provided on a vertically lower side of the insulation adapter 1 is formed of a central conductor 3a and an insulation layer 3b.

The bushing 3 is, for example, a busbar connection bushing of a gas-insulated switchgear and has therein the central conductor 3a connected to the board main circuit, and a periphery thereof is coated with the insulation layer 3b such as epoxy resin. The insulation layer 3b has a conical shape tapered toward the distal end. The bushing 3 is fixed to a tank (not shown) of the gas-insulated switchgear by a bolt.

Here, connection of the insulation adapter 1, the busbar conductor 2a of the busbar 2, and the central conductor 3a of the bushing 3 will be described.

The central conductor 3a of the bushing 3 has an internal thread to be fitted with a stud bolt 5, and the stud bolt 5 is screwed into the central conductor 3a of the bushing 3, whereby the stud bolt 5 is fixed. In a state in which fixation conductors 6 are put in the conductive layer 1c inside the insulation adapter 1, the insulation adapter 1 is fitted to the stud bolt 5 and the bushing 3 from above in the vertical direction. An end of the busbar 2 is inserted into the horizontal-direction cylindrical portion of the insulation adapter 1, and the busbar conductor 2a is clamped between the fixation conductors 6 and then tightened by the stud bolt 5 and a nut 7, whereby the insulation adapter 1 and the busbar 2 are fixed.

The fixation conductors 6 are made of metal having high conductivity, such as copper or aluminum, in order to ensure conduction between the busbar conductor 2a of the busbar 2 and the central conductor 3a of the bushing 3. In addition, a support conductor 8 is used so that the fixation conductors 6 and the busbar conductor 2a surface-to-surface contact with each other when tightened.

The insulation plug 4 is formed of an insulation layer 4a, an upper metal insert 4b, a lower metal insert 4c, and a lid portion 4d. A part on the upper side of the upper metal insert 4b is the lid portion 4d, and the upper metal insert 4b and the lid portion 4d have an integrated structure.

The insulation plug 4 is formed such that the upper metal insert 4b and the lower metal insert 4c such as copper or aluminum are buried in the insulation layer 4a such as epoxy resin.

The insulation layer 4a has a conical shape tapered toward the distal end. The lower metal insert 4c has an internal thread and is screwed with the stud bolt 5, whereby the insulation plug 4 is fixed while having a certain surface pressure.

The bushing 3 and the insulation plug 4 are screwed into the vertical-direction conical portions of the insulation adapter 1 with grease therebetween and are connected to the insulation adapter 1 while having certain surface pressures.

In the solid insulated busbar 100 of embodiment 1, a part on the upper side of the upper metal insert 4b buried in the insulation plug 4 is formed in such a shape that covers the insulation layer 4a and contacts with the grounded shield layer 1b at a surface of the insulation adapter 1 while ensuring a sufficient conduction area therewith, for example, a disk shape. The disk-shaped part is the lid portion 4d.

That is, the conductive lid portion 4d closing the upper opening of the insulation adapter 1 is integrated with the upper metal insert 4b.

In the solid insulated busbar 100 of embodiment 1, the lid portion 4d and the grounded shield layer 1b contact with each other while ensuring conduction therebetween. Therefore, an electric charge at the surface of the solid insulated busbar 100 can flow to the ground if only one of a ground wire 9A (connected to the grounded shield layer 1b) or a ground wire 9B (connected to the lid portion 4d) is provided.

Next, for clarifying the feature of the solid insulated busbar 100 of embodiment 1, a solid insulated busbar 100A in a comparative example will be described with reference to FIG. 2. The solid insulated busbar and the insulation plug are respectively denoted by 100A and 4A, for the purpose of discriminating from the solid insulated busbar 100.

The solid insulated busbar 100A in FIG. 2 and the solid insulated busbar 100 of embodiment 1 are different in the structure of the insulation plug 4A.

The insulation plug 4A is formed of the insulation layer 4a, the upper metal insert 4b, the lower metal insert 4c, and a conductive cap 10.

The conductive cap 10 is attached to the insulation adapter 1, for the purpose of blocking an electric field, grounding circulation current, and preventing entry of a foreign material, after connection work for a board main circuit and the busbar 2.

The conductive cap 10 and the insulation adapter 1 are structured such that the inner diameter of the conductive cap 10 is smaller than the outer diameter of the insulation adapter 1 and the conductive cap 10 is put over the insulation adapter 1 so as to produce a surface pressure between the insulation adapter 1 and the conductive cap 10, thus ensuring contact therebetween.

In many cases, the conductive cap 10 is made of conductive rubber or conductive plastic in view of ease of attachment to the insulation adapter 1.

However, using a rubber or plastic material as described above has a problem that the material is deteriorated due to temperature/humidity variation in the environment and undergoes creep deformation due to continuous application of the surface pressure through a long period, so that the surface pressure is reduced. If the surface pressure is reduced, contact between the conductive cap 10 and the insulation adapter 1 becomes unstable and the conductive cap 10 of the insulation plug 4 comes into an electrically floating state, so that an electric charge at the surface of the conductive cap 10 might not be able to flow to the ground.

In the solid insulated busbar 100 of embodiment 1, the lid portion 4d of the insulation plug 4 is made of a conductive metal material such as copper or aluminum, and closely contacts with the grounded shield layer 1b at a surface of the insulation adapter 1. Since the lid portion 4d is made of a conductive metal material, the electric charge grounding function for the surface of an insulating material and the foreign material entry preventing function can be ensured. Thus, the electric field blocking function, the electric charge grounding function for an insulating material surface, and the foreign material entry preventing function can be prevented from being deteriorated through a long period.

Next, a structure of a solid insulated busbar in a case where the busbars 2 are connected to the insulation adapter 1 from both of the left and right sides, will be described with reference to FIG. 3. The solid insulated busbar is denoted by 101, for the purpose of discriminating from the solid insulated busbar 100.

As shown in FIG. 3, in a case where the busbar 2 is connected from both of the left and right sides of the insulation adapter 1, insertion parts for the busbars 2 are provided on both of the left and right sides, so that the entire shape becomes a cross shape.

The central conductor 3a of the bushing 3 has an internal thread to be fitted with the stud bolt 5, and the stud bolt 5 is screwed into the central conductor 3a of the bushing 3, whereby the stud bolt 5 is fixed. In a state in which the fixation conductors 6 are put in the conductive layer 1c inside the insulation adapter 1, the insulation adapter 1 is fitted to the stud bolt 5 and the bushing 3 from above in the vertical direction. Ends of the busbars 2 are inserted into the horizontal-direction cylindrical portions on both of the left and right sides of the insulation adapter 1, and the busbar conductors 2a are clamped between the fixation conductors 6 and tightened by the stud bolt 5 and the nut 7, whereby the insulation adapter 1 and the busbars 2 are fixed.

The fixation conductors 6 are made of metal having high conductivity, such as copper and aluminum, in order to ensure conduction between the central conductor 3a of the bushing 3 and the busbar conductors 2a of the two busbars 2.

In the solid insulated busbar 100 of embodiment 1, the upper metal insert 4b and the lid portion 4d of the insulation plug 4 have an integrated structure and are made of a conductive metal material such as copper or aluminum. However, the upper metal insert 4b and the lid portion 4d may be separated from each other and the lid portion 4d may be made of a non-metal conductive material, whereby the same effects can be provided.

That is, the insulation plug 4 may include the upper metal insert 4b buried in the insulation plug 4, and the conductive lid portion 4d, and the lid portion 4d may be in contact with the grounded shield layer 1b at a surface of the insulation adapter 1.

As described above, the solid insulated busbar of embodiment 1 includes a busbar having a busbar conductor and an insulation layer coating a periphery of the busbar conductor; an insulation adapter supporting the busbar; an insulation plug provided on a vertically upper side of the insulation adapter and connected to the insulation adapter; and a bushing provided on a vertically lower side of the insulation adapter in order to connect the insulation adapter and outside, wherein the insulation plug includes a lid portion integrated with the upper metal insert buried in the insulation plug, and the lid portion is in contact with a grounded shield layer at a surface of the insulation adapter.

Thus, the solid insulated busbar of embodiment 1 can prevent the electric field blocking function, the electric charge grounding function, and the foreign material entry preventing function from being deteriorated through a long period.

### Embodiment 2

A solid insulated busbar of embodiment 2 has a bolt portion added at an upper part of the insulation plug so as to enable management of a tightening force to the insulation adapter, for the purpose of improving assemblability.

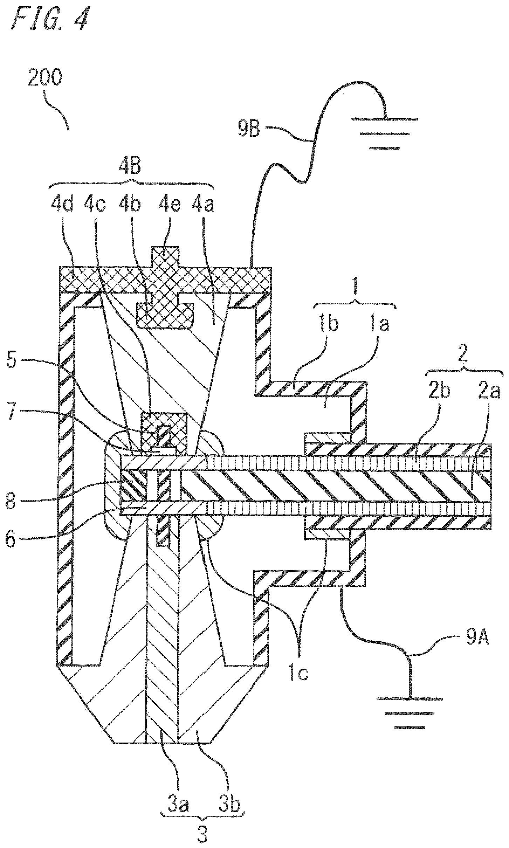

The solid insulated busbar of embodiment 2 will be described focusing on a difference from embodiment 1, with reference to FIG. 4 which is a sectional view showing a structure of the solid insulated busbar.

In the structure view in embodiment 2, parts that are the same as or correspond to those in embodiment 1 are denoted by the same reference characters. The solid insulated busbar and the insulation plug are respectively denoted by 200 and 4B, for the purpose of discriminating from the solid insulated busbar 100 of embodiment 1.

The insulation plug 4B is formed of the insulation layer 4a, the upper metal insert 4b, the lower metal insert 4c, the lid portion 4d, and a bolt portion 4e. The bolt portion 4e is added at an upper part of the insulation plug 4, that is, an upper part of the lid portion 4d, and may be a hexagonal bolt, for example.

The insulation plug 4B is formed such that the upper metal insert 4b and the lower metal insert 4c such as copper or aluminum are buried in the insulation layer 4a such as epoxy resin.

The insulation layer 4a has a conical shape tapered toward the distal end. The lower metal insert 4c has an internal thread and is screwed with the stud bolt 5, whereby the insulation plug 4B is fixed while having a certain surface pressure.

The bushing 3 and the insulation plug 4B are screwed into the vertical-direction conical portions of the insulation adapter 1 with grease therebetween and are connected to the insulation adapter 1 while having certain surface pressures.

In the solid insulated busbar 200 of embodiment 2, the bolt portion 4e is added at an upper part of the insulation plug 4B, as compared to the solid insulated busbar 100 of embodiment 1. By tightening the bolt portion 4e with a torque wrench, a force of tightening the insulation plug 4B to the insulation adapter 1 can be managed. Thus, the solid insulated busbar 200 of embodiment 2 enables improvement in assemblability as compared to the solid insulated busbar 100 of embodiment 1.

The other configurations are the same as those of the solid insulated busbar 100 of embodiment 1 and therefore the description thereof is omitted.

As described above, the solid insulated busbar of embodiment 2 has a bolt portion added at an upper part of the insulation plug so as to enable management of a tightening force to the insulation adapter, for the purpose of improving assemblability.

Thus, the solid insulated busbar of embodiment 2 can prevent the electric field blocking function, the electric charge grounding function, and the foreign material entry preventing function from being deteriorated through a long period. Further, the solid insulated busbar of embodiment 2 enables management of a tightening force to the insulation adapter, whereby assemblability can be improved.

### Embodiment 3

A solid insulated busbar of embodiment 3 has such a structure that the lid portion is attached by a fixation bolt after the insulation layer, the upper metal insert, and the lower metal insert of the insulation plug are inserted into the insulation adapter.

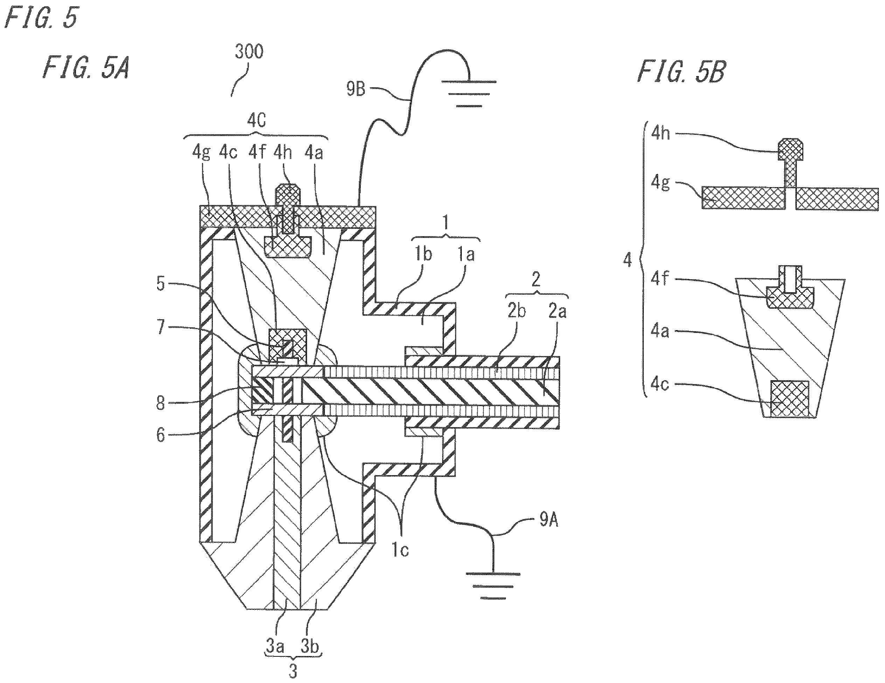

The solid insulated busbar of embodiment 3 will be described focusing on a difference from embodiment 1, with reference to FIG. 5A which is a sectional view showing a structure of the solid insulated busbar and FIG. 5B which is a sectional view showing a part of FIG. 5A.

In the structure views in embodiment 3, parts that are the same as or correspond to those in embodiment 1 are denoted by the same reference characters. The solid insulated busbar and the insulation plug are respectively denoted by 300 and 4C, for the purpose of discriminating from the solid insulated busbar 100 of embodiment 1.

The insulation plug 4C is formed of the insulation layer 4a, an upper metal insert 4f, the lower metal insert 4c, a lid portion 4g, and a fixation bolt 4h.

FIG. 5B shows a manner for fixing the lid portion 4g to the upper metal insert 4f using the fixation bolt 4h. The upper metal insert 4f has an internal thread to be fitted with a screw part of the fixation bolt 4h.

After the insulation layer 4a, the upper metal insert 4f, and the lower metal insert 4c of the insulation plug 4C except the lid portion 4g and the fixation bolt 4h are inserted into the insulation adapter 1, the lid portion 4g is fixed to the upper metal insert 4f by the fixation bolt 4h. As a result, the lid portion 4g of the insulation plug 4C closely contacts with the grounded shield layer 1b of the insulation adapter 1.

The insulation layer 4a has a conical shape tapered toward the distal end. The lower metal insert 4c has an internal thread and is screwed with the stud bolt 5, whereby the insulation plug 4C is fixed while having a certain surface pressure.

The bushing 3 and the insulation plug 4C are screwed into the vertical-direction conical portions of the insulation adapter 1 with grease therebetween and are connected to the insulation adapter 1 while having certain surface pressures.

Next, the feature of the structure of the solid insulated busbar 300 of embodiment 3 will be described.

In embodiment 1, since the insulation plug 4 is inserted into the insulation adapter 1 while rotating, torsion occurs between the insulation layer 4a of the insulation plug 4C, and the insulation layer 1a and the grounded shield layer 1b of the insulation adapter 1, so that the insulation layer 1a and the grounded shield layer 1b might be worn.

In embodiment 3, the upper metal insert 4f has an internal thread, whereby the lid portion 4g can be fixed to the upper metal insert 4f by the fixation bolt 4h after the insulation layer 4a, the upper metal insert 4f, and the lower metal insert 4c of the insulation plug 4C are inserted into the insulation adapter 1.

The other configurations are the same as those in embodiment 1 and therefore the description thereof is omitted.

As described above, the solid insulated busbar of embodiment 3 has such a structure that the lid portion is attached by the fixation bolt after the insulation layer, the upper metal insert, and the lower metal insert of the insulation plug are inserted into the insulation adapter.

Thus, the solid insulated busbar of embodiment 3 can prevent the electric field blocking function, the electric charge grounding function, and the foreign material entry preventing function from being deteriorated through a long period. Further, the solid insulated busbar of embodiment 3 can eliminate torsion and wear between the insulation plug and the insulation layer of the insulation adapter.

### Embodiment 4

A solid insulated busbar of embodiment 4 has such a structure that the lid portion is formed after the insulation layer, the upper metal insert, and the lower metal insert of the insulation plug are inserted into the insulation adapter.

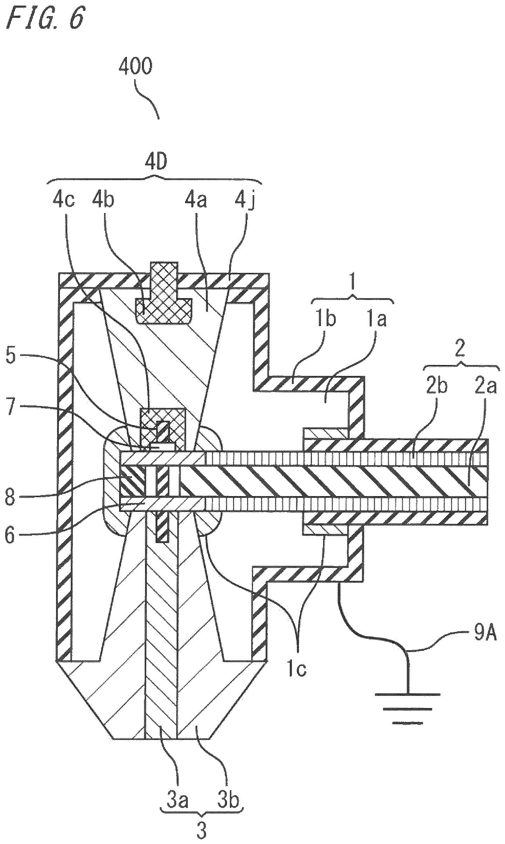

The solid insulated busbar of embodiment 4 will be described focusing on a difference from embodiment 1, with reference to FIG. 6 which is a sectional view showing a structure of the solid insulated busbar.

In the structure view in embodiment 4, parts that are the same as or correspond to those in embodiment 1 are denoted by the same reference characters. The solid insulated busbar and the insulation plug are respectively denoted by 400 and 4D, for the purpose of discriminating from the solid insulated busbar 100 of embodiment 1.

The insulation plug 4D is formed of the insulation layer 4a, the upper metal insert 4b, the lower metal insert 4c, and a lid portion 4j.

The insulation plug 4D (except the lid portion 4j) is formed such that the upper metal insert 4b and the lower metal insert 4c such as copper or aluminum are buried in the insulation layer 4a such as epoxy resin.

The insulation layer 4a has a conical shape tapered toward the distal end. The lower metal insert 4c has an internal thread and is screwed with the stud bolt 5, whereby the insulation plug 4D is fixed while having a certain surface pressure.

The bushing 3 and the insulation plug 4D (except the lid portion 4j) are screwed into the vertical-direction conical portions of the insulation adapter 1 with grease therebetween and are connected to the insulation adapter 1 while having certain surface pressures.

After the insulation layer 4a, the upper metal insert 4b, and the lower metal insert 4c of the insulation plug 4D (except the lid portion 4j) are inserted into the insulation adapter 1, the lid portion 4j of the insulation plug 4D is formed by applying a conductive paint using a spray or the like. That is, the lid portion 4j is provided at the vertically uppermost surface of the insulation plug 4D.

In the solid insulated busbar 400 of embodiment 4, the insulation adapter 1 has the grounded shield layer 1b as in embodiment 1. That is, after the insulation layer 4a, the upper metal insert 4b, and the lower metal insert 4c of the insulation plug 4D except the lid portion 4j are inserted into the insulation adapter 1, the lid portion 4j of the insulation plug 4D is formed by applying a conductive paint using a spray or the like.

Thus, the solid insulated busbar 400 of embodiment 4 has such a structure that the entire area including the grounded shield layer 1b of the insulation adapter 1 and the lid portion 4j of the insulation plug 4D is coated with the conductive paint, and does not have a connection structure using a surface pressure. Therefore, contact failure due to reduction of the surface pressure does not occur.

Normally, the grounded shield layer 1b is formed by applying a conductive paint on a surface of the insulation adapter 1 after the insulation adapter 1 is molded. However, by applying a conductive paint on a surface of the insulation layer 1a of the insulation adapter 1 and a surface of the insulation plug 4 using a spray or the like after the insulation plug 4 is inserted into the insulation adapter 1, the grounded shield layer 1b of the insulation adapter 1 and the lid portion 4j of the insulation plug 4D can be formed over the entire surfaces of the insulation adapter 1 and the insulation plug 4.

The other configurations are the same as those of the solid insulated busbar 100 of embodiment 1 and therefore the description thereof is omitted.

As described above, the solid insulated busbar of embodiment 4 has such a structure that the lid portion is formed after the insulation layer, the upper metal insert, and the lower metal insert of the insulation plug are inserted into the insulation adapter.

Thus, the solid insulated busbar of embodiment 4 can prevent the electric field blocking function, the electric charge grounding function, and the foreign material entry preventing function from being deteriorated through a long period. Further, the solid insulated busbar of embodiment 4 provides an effect that contact failure due to reduction of the surface pressure of the lid portion does not occur.

Although the disclosure is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the disclosure.

It is therefore understood that numerous modifications which have not been exemplified can be devised without departing from the scope of the present disclosure. For example, at least one of the constituent components may be modified, added, or eliminated. At least one of the constituent components mentioned in at least one of the preferred embodiments may be selected and combined with the constituent components mentioned in another preferred embodiment.

### DESCRIPTION OF THE REFERENCE CHARACTERS

- 1: insulation adapter
- 1a: insulation layer
- 1b: grounded shield layer
- 1c: conductive layer
- 2: busbar
- 2a: busbar conductor
- 2b: insulation layer
- 3: bushing
- 3a: central conductor
- 3b: insulation layer
- 4, 4A, 4B, 4C, 4D: insulation plug
- 4a: insulation layer
- 4b, 4f: upper metal insert
- 4c: lower metal insert
- 4d, 4g, 4j: lid portion
- 4e: bolt portion
- 4h: fixation bolt
- 5: stud bolt
- 6: fixation conductor
- 7: nut

- 8: support conductor
- 9A, 9B: ground wire
- 10: conductive cap
- 100, 100A, 101, 200, 300, 400: solid insulated busbar

## Claims

1. A solid insulated busbar comprising:
a busbar having a busbar conductor and an insulation layer coating a periphery of the busbar conductor;
an insulation adapter supporting the busbar;
an insulation plug provided on a vertically upper side of the insulation adapter and connected to the insulation adapter; and
a bushing provided on a vertically lower side of the insulation adapter in order to connect the insulation adapter and outside, wherein
the insulation plug includes an upper metal insert and a conductive lid portion, and the lid portion is in contact with a grounded shield layer at a surface of the insulation adapter.

2. The solid insulated busbar according to claim 1, wherein
the upper metal insert and the lid portion have an integrated structure.

3. The solid insulated busbar according to claim 2, wherein
a bolt portion tightening the insulation plug to the insulation adapter is provided at an upper part of the lid portion.

4. The solid insulated busbar according to claim 1, wherein
the upper metal insert and the lid portion are structured to be separable from each other, and a fixation bolt tightening the lid portion and the upper metal insert is provided.

5. The solid insulated busbar according to claim 1, wherein
the lid portion is provided at a vertically uppermost surface of the insulation plug.

6. The solid insulated busbar according to claim 5, wherein
the lid portion is formed by spray application.
